# EUROPEAN PATENT APPLICATION

(11) **EP 4 109 584 A1**
(43) Date of publication of application: **28.12.2022**
(21) Application number: 20919835.7
(22) Date of filing: 22.12.2020
(51) Int. Cl.: H01M 4/13, H01M 4/66, H01M 4/70, H01M 10/052, H01M 10/0562, H01M 10/0585, H01M 50/50, H01M 50/572

(54) **BATTERY**

(30) Priority: 20.02.2020 JP 2020026873
(71) Applicant: Panasonic Intellectual Property Management Co., Ltd., Osaka-shi, Osaka 540-6207 (JP)
(72) Inventor: KOGA Eiichi, Osaka-shi, Osaka 540-6207 (JP)
(74) Representative: Eisenführ Speiser
(86) International application number: PCT/JP2020/047884
(87) International publication number: WO 2021/166421

(57) **Abstract**

A battery of the present disclosure includes a first solid-state battery cell and a buffer layer. The first solid-state battery cell includes a positive electrode, a negative electrode and a solid electrolyte layer located between the positive electrode and the negative electrode. The positive electrode or the negative electrode has a current collector. The buffer layer is in contact with a face of the current collector opposite to the solid electrolyte layer. The buffer layer includes a PTC material, a resin and a first metal. The first metal is at least one selected from the group consisting of Sn, Cu, Al, Mg and Zn.

## Description

### Technical Field

The present disclosure relates to a battery.

### Background Art

Batteries may generate heat rapidly due to, for example, short circuits. Techniques that suppress such an increase in battery temperature have been suggested. For example, Patent Literature 1 discloses an all-solid-state battery in which a current collector having PTC (positive temperature coefficient) characteristics is disposed on a positive electrode active material. Patent Literature 2 discloses an all-solid-state battery having a PTC layer between an active material layer and a current collector.

### Citation List

### Patent Literature

PTL 1: Japanese Unexamined Patent Application Publication No. 2017-130281
PTL 2: Japanese Unexamined Patent Application Publication No. 2018-116810

### Summary of Invention

### Technical Problem

In the related art, there is a demand that the generation of heat in batteries be suppressed.

The present disclosure thus provides a highly reliable battery that can suppress the generation of heat in the battery.

### Solution to Problem

A battery according to one embodiment of the present disclosure includes a first solid-state battery cell and a buffer layer, wherein the first solid-state battery cell includes a positive electrode, a negative electrode and a solid electrolyte layer located between the positive electrode and the negative electrode, the positive electrode or the negative electrode has a current collector, the buffer layer is in contact with a face of the current collector opposite to the solid electrolyte layer, the buffer layer includes a PTC material, a resin and a first metal, and the first metal is at least one selected from the group consisting of Sn, Cu, Al, Mg and Zn.

### Advantageous Effects of Invention

The battery according to the present disclosure can suppress the generation of heat in the battery and can realize high reliability.

### Brief Description of Drawings

[Fig. 1] Fig. 1 is a set of views illustrating a schematic configuration of a battery according to an embodiment.
[Fig. 2] Fig. 2 is a set of views illustrating a schematic configuration of a battery according to Modification Example 1 of the embodiment.
[Fig. 3] Fig. 3 is a set of views illustrating a schematic configuration of a battery according to Modification Example 2 of the embodiment.
[Fig. 4] Fig. 4 is a set of views illustrating a schematic configuration of a battery according to Modification Example 3 of the embodiment.
[Fig. 5] Fig. 5 is a view illustrating a schematic configuration of a particulate PTC material and a first metal layer in a buffer layer of a battery according to Modification Example 4 of the embodiment.
[Fig. 6] Fig. 6 is a set of views illustrating a schematic configuration of a laminated battery according to Modification Example 5 of the embodiment.

### Description of Embodiments

### (Summary of the present disclosure)

A battery according to one aspect of the present disclosure includes a first solid-state battery cell and a buffer layer. The first solid-state battery cell includes a positive electrode, a negative electrode and a solid electrolyte layer located between the positive electrode and the negative electrode. The positive electrode or the negative electrode has a current collector. The buffer layer is in contact with a face of the current collector opposite to the solid electrolyte layer. The buffer layer includes a PTC material, a resin and a first metal. The first metal is at least one selected from the group consisting of Sn, Cu, Al, Mg and Zn.

For example, a barium titanium oxide (BaTiO₃)-based semiconductor PTC material is easily reduced and is reductively degraded to cause problems when used in a battery. Specifically, the PTC material is reduced to lose a characteristic of switching to a high resistance state that interrupts the current. Further, the contact between the PTC material and a current collector is non-ohmic and causes a high resistance loss to deteriorate battery characteristics.

In contrast, the battery according to the above aspect can solve the above problem by virtue of the buffer layer including a PTC material, a resin and a first metal. Specifically, the buffer layer, due to its containing a resin, can achieve a higher level of softness than other battery constituent components, and consequently the buffer layer and the current collector can be joined together with high reliability.

Sn, Cu, Al, Mg or Zn has a lower work function than the surface of a BaTiO₃-based semiconductor PTC material. Thus, the first metal can establish a low-resistance ohmic contact with the PTC material.

The PTC material, and the first metal in ohmic contact with the PTC material are included in the resin. In this manner, the resistance loss can be reduced. Further, the resin can protect the PTC material from surroundings such as a reducing atmosphere while absorbing impacts and a stress of thermal cycles, thereby adding highly environmental resistant and low-loss PTC characteristics to the battery.

As a result of the above configuration, the buffer layer reliably increases its resistance in the event of abnormal heating in the battery, and effectively acts to interrupt the current. Specifically, the buffer layer having PTC characteristics functions as a current interrupt mechanism in the event of heat generation. When the battery is in a normal operation state in which the PTC characteristics do not work, there is no polarity stemming from the ohmic contact and the loss in battery characteristics during charging and discharging is small. Thus, the battery can attain high reliability and high performance with reduced probabilities of ignition or smoke combustion.

For example, the first metal may be at least one selected from the group consisting of Sn, Al, Mg and Zn.

In the above case, the buffer layer can attain enhanced electron conductivity, and thus the PTC battery that is obtained achieves a smaller resistance loss.

For example, the buffer layer may include a PTC layer and a conductive resin layer. The PTC layer may include the PTC material, and the conductive resin layer may include the resin and the first metal and may not include the PTC material. The conductive resin layer may cover a face of the PTC layer opposite to the current collector.

In the above case, the conductive resin layer protects the face of the PTC layer and can also establish an ohmic contact with the PTC layer. Thus, the resistance loss that will affect battery characteristics is reduced, and the PTC battery that is obtained is also highly resistant to stress such as external stress and achieves high reliability.

For example, the buffer layer may include one more of the conductive resin layer covering a face of the PTC layer on the current collector side.

In the above case, the conductive resin layers protect both faces of the PTC layer and can also establish an ohmic contact with the PTC layer and an ohmic contact with the current collector. Thus, the resistance loss that will affect battery characteristics is reduced, and the PTC battery that is obtained is also highly resistant to stress such as external stress and achieves high reliability.

For example, the buffer layer may include a metal layer covering a face of the PTC layer on the current collector side. The metal layer may include the first metal.

In the above case, the metal layer can establish an ohmic contact with the PTC layer and an ohmic contact with the current collector. Thus, the resistance loss that will affect battery characteristics can be reduced.

For example, the buffer layer may include an alloy layer in contact with the current collector. The alloy layer may include an alloy containing a second metal, and the second metal may be at least one selected from the group consisting of Sn, Ag, Cu, Bi, Al and Zn.

In the above case, the buffer layer establishes a low-resistance ohmic contact with the current collector and can be strongly connected to the current collector through the alloy layer.

For example, the second metal may be at least one selected from the group consisting of Sn, Bi, Al and Zn.

In the above case, the buffer layer establishes a low-resistance ohmic contact with the current collector and can be strongly connected to the current collector through the alloy layer.

For example, the PTC material may be particles, and the particles may be coated with the first metal.

In the above case, all the PTC particles can establish an ohmic contact and can produce PTC characteristics. Thus, the loss of battery characteristics is further reduced. In addition, the PTC material that is poorly resistant to environmental factors can be protected more efficiently, and thus highly reliable PTC characteristics can be realized. Thus, the battery can attain high performance with reduced probabilities of ignition or smoke combustion.

For example, the battery according to one aspect of the present disclosure may further include a second solid-state battery cell. The first solid-state battery cell and the second solid-state battery cell may be laminated together through the buffer layer.

The battery cells may be laminated without deterioration of battery characteristics, and the resultant laminated battery is of high reliability and high performance and attains reduced probabilities of ignition or smoke combustion.

For example, the solid electrolyte layer may include a solid electrolyte having lithium ion conductivity.

Embodiments will be described in detail hereinbelow with reference to the drawings.

The embodiments discussed below illustrate comprehensive or specific examples. The configurations described in the embodiments below such as numerical values, shapes, materials, constituent elements, and the positions and manners of connection of the constituent elements are only illustrative and do not intend to limit the scope of the present disclosure thereto. Of the constituent elements described in the embodiments below, those which are not described in the independent claim are illustrated as optional constituent elements.

The drawings are not necessarily strict. In the drawings, substantially identical elements are assigned with the same numerals, and overlaps in the description of such elements will be omitted or simplified.

In the present specification and drawings, the x axis, the y axis and the z axis indicate the three axes in a three-dimensional orthogonal coordinate. In the embodiments, the z axis direction is the thickness direction of a battery. In the present specification, the term "thickness direction" is the direction that is perpendicular to the plane up to which layers are laminated.

In the present specification, the phrase "in plan view" means that a battery is viewed along the laminating direction of the battery. In the present specification, the term "thickness" means the length of a battery or a layer in the laminating direction.

In the present specification, "in" and "out" such as in the cases of "inside" and "outside" indicate whether the location of interest is "in"-side or "out"-side of the reference when the battery is viewed along the laminating direction of the battery.

In the present specification, the terms "on (or above)" and "under (or below)" used in the description of battery configurations do not mean being in the upward direction (perpendicularly above) and being in the downward direction (perpendicularly below) in the absolute spatial recognition, but indicate relative positional relationships based on the order in which layers are laminated. Further, the terms "on" and "under" mean not only that two constituent elements are disposed with a spacing therebetween and another constituent element is present between the two constituent elements, but also that two constituent elements are disposed in close and direct contact with each other.

### (Embodiments)

### [Overview of batteries]

First, a battery according to an embodiment will be described.

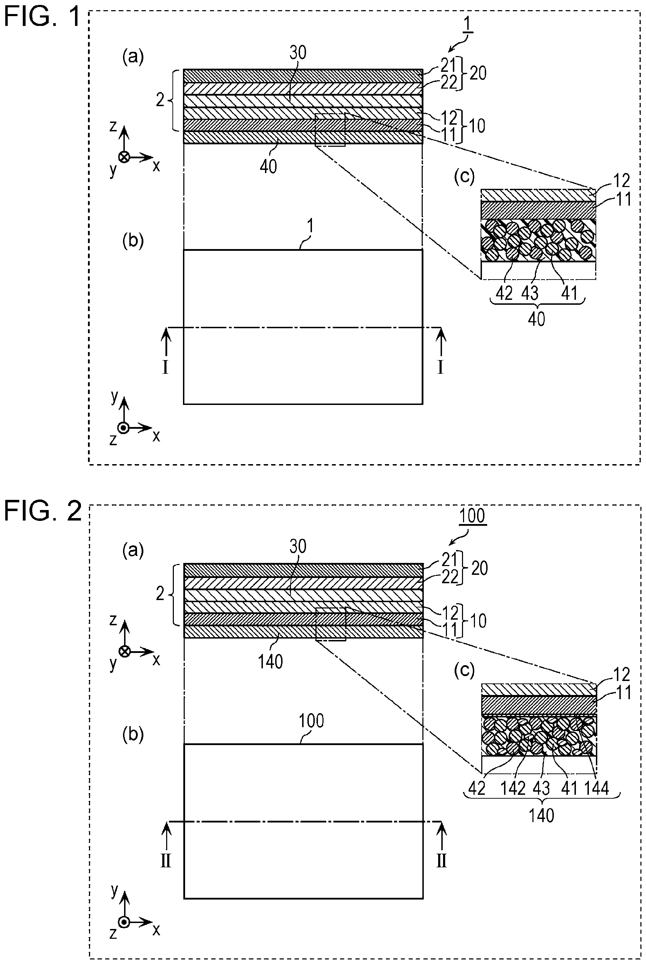

Fig. 1 is a set of views illustrating a schematic configuration of a battery according to the present embodiment. Specifically, Fig. 1(a) is a sectional view of a battery 1 according to the present embodiment, and Fig. 1(b) is a plan view of the battery 1 as viewed from the positive side in the z-axis direction. Fig. 1(a) illustrates a cross section at the position indicated by the line I-I in Fig. 1(b). Fig. 1(c) is an enlarged schematic sectional view of a portion of the cross section illustrated in Fig. 1(a).

As illustrated in Fig. 1, the battery 1 includes a solid-state battery cell 2 and a buffer layer 40. The battery 1 is an all-solid-state battery.

The solid-state battery cell 2 is an exemplary first solid-state battery cell, and includes a first electrode 10, a second electrode 20 and a solid electrolyte layer 30. The first electrode 10 has a first current collector 11 and a first active material layer 12 disposed in contact with the first current collector 11. The second electrode 20 is the counter electrode for the first electrode 10, and has a second current collector 21 and a second active material layer 22 disposed in contact with the second current collector 21. The solid electrolyte layer 30 is located between the first electrode 10 and the second electrode 20, and is in contact with the first active material layer 12 and the second active material layer 22. The buffer layer 40 is in contact with a face of the first current collector 11 opposite to the solid electrolyte layer 30. The buffer layer 40 includes a PTC material 41, a first metal 42 and a resin 43.

As illustrated in Fig. 1, the first current collector 11 of the solid-state battery cell 2, and the buffer layer 40 are the same as one another in shape, position and size in plan view. The entirety of the face of the first current collector 11 on the buffer layer 40 side is in contact with the buffer layer 40. This manner of contact is advantageous from the point of view of reducing the resistance of the contact portion.

### [Solid-state battery cells]

Hereinafter, the constituent elements of the solid-state battery cell 2 will be described in detail.

The first current collector 11, the first active material layer 12, the solid electrolyte layer 30, the second active material layer 22, the second current collector 21 and the buffer layer 40 are each rectangular in plan view. The shapes in plan view of the first current collector 11, the first active material layer 12, the solid electrolyte layer 30, the second active material layer 22, the second current collector 21 and the buffer layer 40 are not particularly limited and may be shapes other than rectangular such as circular, elliptical or polygonal.

In the present embodiment, the first electrode 10 is a positive electrode, and the second electrode 20 is a negative electrode. That is, the first current collector 11 is a positive electrode current collector, and the first active material layer 12 is a positive electrode active material layer. The second current collector 21 is a negative electrode current collector, and the second active material layer 22 is a negative electrode active material layer. The buffer layer 40 is connected to the positive electrode current collector.

The first electrode 10 may be a negative electrode, and the second electrode 20 may be a positive electrode. That is, the first current collector 11 may be a negative electrode current collector, and the first active material layer 12 may be a negative electrode active material layer. The second current collector 21 may be a positive electrode current collector, and the second active material layer 22 may be a positive electrode active material layer. The buffer layer 40 may be connected to the negative electrode current collector.

In the present specification, the first current collector 11 and the second current collector 21 may be collectively referred to simply as the "current collectors". The current collectors are not particularly limited as long as formed of a conductive material.

For example, the current collectors that are used may be foil-like bodies, plate-like bodies, mesh-like bodies or other forms of bodies made of such a material as stainless steel, nickel (Ni), aluminum (Al), iron (Fe), titanium (Ti), copper (Cu), palladium (Pd), gold (Au), platinum (Pt), or an alloy of two or more of these metals. The materials of the current collectors may be selected appropriately in consideration of the manufacturing process, the resistance to melting and decomposition at service temperatures and service pressures, the battery operating potentials applied to the current collectors, and conductivity. The materials of the current collectors may also be selected in accordance with the required levels of tensile strength and heat resistance. For example, the current collectors may be high-strength electrolytic copper foils or clad materials in which dissimilar metal foils are laminated.

For example, the thickness of the current collectors is in the range of greater than or equal to 10 µm and less than or equal to 100 µm. From the point of view of increasing the adhesion with the first active material layer 12 and the second active material layer 22, and the adhesion with the buffer layer 40, the surface of the current collectors may be roughened to have irregularities. Further, the surface of the current collectors may be coated with an adhesive component such as an organic binder. In this manner, the quality of interface joint between the current collectors and other layers may be enhanced, and the battery can attain enhancements in mechanical and thermal reliabilities and enhancements in PTC characteristics reliabilities offered by enhanced cycle characteristics and the high quality of joint with the buffer layer 40.

The first active material layer 12 is disposed in contact with one face of the first current collector 11. The first active material layer 12 in the present embodiment is a positive electrode active material layer, and therefore the first active material layer 12 includes at least a positive electrode active material. The first active material layer 12 is a layer principally composed of a positive electrode material such as a positive electrode active material. The positive electrode active material is a material that is oxidized or reduced in conjunction with intercalation or deintercalation of metal ions such as lithium (Li) ions or magnesium (Mg) ions into or from the crystal structure at a higher potential than the negative electrode. The type of the positive electrode active material may be selected appropriately in accordance with the type of the battery, and a known positive electrode active material may be used.

Examples of the positive electrode active materials include compounds containing lithium and a transition metal element, with specific examples including oxides containing lithium and a transition metal element, and phosphoric acid compounds containing lithium and a transition metal element. Examples of the oxides containing lithium and a transition metal element include layered oxides such as lithium nickel composite oxides including LiNiₓM₁₋ₓO₂ (wherein M is at least one element of Co, Al, Mn, V, Cr, Mg, Ca, Ti, Zr, Nb, Mo and W, and x is 0 < x ≤ 1), lithium cobalt oxide (LiCoO₂), lithium nickel oxide (LiNiO₂) and lithium manganese oxide (LiMn₂O₄), and lithium manganese oxides having a spinel structure (for example, LiMn₂O₄, Li₂MnO₃ and LiMnO₂). Examples of the phosphoric acid compounds containing lithium and a transition metal element include lithium iron phosphate (LiFePO₄) having an olivine structure. The positive electrode active material may also include sulfur (S) or a sulfide such as lithium sulfide (Li₂S). In this case, the positive electrode active material that is used may be positive electrode active material particles that are coated or combined with, for example, lithium niobium oxide (LiNbO₃). The positive electrode active materials may be used singly, or two or more may be used in combination.

As described hereinabove, the first active material layer 12 that is a positive electrode active material layer includes at least a positive electrode active material. The positive electrode active material layer may be a mixture layer composed of a mixture of a positive electrode active material and an additive material. Examples of the additive materials that may be used include solid electrolytes such as inorganic solid electrolytes and sulfide-based solid electrolytes, conductive auxiliaries such as acetylene black, and binders such as polyethylene oxide and polyvinylidene fluoride. When the positive electrode active material layer is a mixture of a positive electrode active material and an additive material such as a solid electrolyte in a predetermined ratio, the lithium ion conductivity and also the electron conductivity in the positive electrode active material layer may be enhanced.

For example, the thickness of the first active material layer 12 is, although not limited to, greater than or equal to 5 µm and less than or equal to 300 µm.

The second active material layer 22 is disposed in contact with one face of the second current collector 21. The second active material layer 22 in the present embodiment is a negative electrode active material layer, and therefore the second active material layer 22 includes at least a negative electrode active material. The second active material layer 22 is a layer principally composed of a negative electrode material such as a negative electrode active material. The negative electrode active material is a material that is oxidized or reduced in conjunction with intercalation or deintercalation of metal ions such as lithium (Li) ions or magnesium (Mg) ions into or from the crystal structure at a lower potential than the positive electrode. The type of the negative electrode active material may be selected appropriately in accordance with the type of the battery, and a known negative electrode active material may be used.

Examples of the negative electrode active materials that may be used include carbon materials such as natural graphite, artificial graphite, graphitized carbon fibers and heat-treated resin carbon, and alloy-based materials miscible with solid electrolytes. Examples of the alloy-based materials that may be used include lithium alloys such as LiAl, LiZn, Li₃Bi, Li₃Cd, Li₃Sb, Li₄Si, Li_{4.4}Pb, Li_{4.4}Sn, Li_{0.17}C and LiC₆, oxides of lithium and a transition metal element such as lithium titanium oxide (Li₄Ti₅O₁₂), and metal oxides such as zinc oxide (ZnO) and silicon oxide (SiOₓ). The negative electrode active materials may be used singly, or two or more may be used in combination.

As described hereinabove, the second active material layer 22 that is a negative electrode active material layer includes at least a negative electrode active material. The negative electrode active material layer may be a mixture layer composed of a mixture of a negative electrode active material and an additive material. Examples of the additive materials that may be used include solid electrolytes such as inorganic solid electrolytes and sulfide-based solid electrolytes, conductive auxiliaries such as acetylene black, and binders such as polyethylene oxide and polyvinylidene fluoride. When the negative electrode active material layer is a mixture of a negative electrode active material and an additive material such as a solid electrolyte in a predetermined ratio, the lithium ion conductivity and also the electron conductivity in the negative electrode active material layer may be enhanced.

For example, the thickness of the second active material layer 22 is, although not limited to, greater than or equal to 5 µm and less than or equal to 300 µm.

The solid electrolyte layer 30 is disposed between and in contact with the first active material layer 12 and the second active material layer 22. The solid electrolyte layer 30 includes at least a solid electrolyte. For example, the solid electrolyte layer 30 includes a solid electrolyte as a principal component.

The solid electrolyte may be a known solid electrolyte for batteries that has ion conductivity. The solid electrolyte that is used may be, for example, a solid electrolyte capable of conducting metal ions such as Li lithium ions or Mg magnesium ions. The type of the solid electrolyte may be selected appropriately in accordance with the type of conducted ions. Examples of the solid electrolytes that may be used include inorganic solid electrolytes such as sulfide-based solid electrolytes and oxide-based solid electrolytes. Examples of the sulfide-based solid electrolytes that may be used include lithium-containing sulfides such as Li₂S-P₂S₅ system, Li₂S-SiS₂ system, Li₂S-B₂S₃ system, Li₂S-GeS₂ system, Li₂S-SiS₂-LiI system, Li₂S-SiS₂-Li₃PO₄ system, Li₂S-Ge₂S₂ system, Li₂S-GeS₂-P₂S₅ system and Li₂S-GeS₂-ZnS system. Examples of the oxide-based solid electrolytes that may be used include lithium-containing metal oxides such as Li₂O-SiO₂ and Li₂O-SiO₂-P₂O₅, lithium-containing metal nitrides such as LiₓP_{y}O_{1-z}N_{z}, lithium phosphate (Li₃PO₄), and lithium-containing transition metal oxides such as lithium titanium oxide. The solid electrolytes may be used singly, or two or more may be used in combination. For example, the solid electrolyte layer 30 in the present embodiment includes a solid electrolyte having lithium ion conductivity.

In addition to the solid electrolyte material described above, the solid electrolyte layer 30 may include, for example, a binder such as polyethylene oxide or polyvinylidene fluoride.

For example, the thickness of the solid electrolyte layer 30 is, although not limited to, greater than or equal to 5 µm and less than or equal to 150 µm.

The material of the solid electrolyte may be aggregates of particles. Alternatively, the material of the solid electrolyte may be a sintered structure.

### [Buffer layers]

Next, a specific configuration of the buffer layer 40 will be described.

The buffer layer 40 is a layer having conductivity. The buffer layer 40 is used to establish an electrical connection between the solid-state battery cell 2 and another solid-state battery cell or other member. The buffer layer 40 also functions to buffer the impact to the solid-state battery cell 2.

In the present embodiment, the buffer layer 40 includes a PTC material 41 that has PTC (positive temperature coefficient of resistance) electron conductivity, and also includes a first metal 42 and a resin 43. For example, the PTC material 41 is a BaTiO₃-based semiconductor material. The first metal 42 is a metal having a low work function. For example, the first metal 42 is at least one selected from the group consisting of Sn (tin), Cu (copper), Al (aluminum), Mg (magnesium) and Zn (zinc), or is an alloy of any of these metals. For example, the resin 43 is a thermosetting resin such as epoxy. The resin 43 may be an insulating resin or a conductive resin. For example, the conductive resin contains a thermosetting resin such as epoxy and conductive particles such as Ag. Alternatively, the conductive resin may be an insulating resin containing a conductive filler such as metal particles, or may be a conductive polymer containing no conductive fillers.

The first metal 42 and the PTC material 41 are pulverized particles and are contained in the resin 43. The PTC material 41 and the first metal 42 may be contained in appropriate proportions so that the buffer layer 40 will have PTC resistance-temperature characteristics. For example, the content of the first metal 42 is preferably such that the buffer layer 40 will show PTC resistance characteristics with temperature and the room temperature resistance that is exhibited will be a level corresponding to the content of the PTC material 41. With such a configuration, ohmic contact can be obtained at the connection between the buffer layer 40 and the current collector and at the interface between the PTC material 41 and the first metal 42. That is, the battery does not have any non-ohmic contact between the buffer layer 40 and the current collector, or between the PTC material 41 and the first metal 42. Thus, PTC characteristics can be added to the battery with low loss. Any non-ohmic contact adds an interfacial resistance and thus adds a resistance loss to the battery characteristics.

For example, 30 vol% to 80 vol% of the PTC material 41 and 5 vol% to 40 vol% of the first metal 42 may be added to the resin 43. Here, vol% is the proportion relative to the total volume of the buffer layer 40. The proportions may be controlled appropriately depending on the dispersibility in the resin 43 and resistance characteristics. The electrical resistance of the buffer layer 40 may be measured by a four-terminal method or a four-point probe method using an instrument such as, for example, Loresta series manufactured by Mitsubishi Chemical Analytech Co., Ltd. For example, the thickness of the buffer layer 40 is, although not limited to, greater than or equal to 5 µm and less than or equal to 300 µm.

Regarding the electrical characteristics, the buffer layer 40 is expected to have PTC electron conductivity and to have an ohmic contact with the current collector. Ohmic contact properties between the current collector and the buffer layer 40 may be estimated by evaluating voltage-current characteristics in both directions under a direct current and determining the presence or absence of polarity. Ohmic contact properties between the particles of the PTC material 41 and the particles of the first metal 42 may be directly estimated based on the presence or absence of polarity in nanoprobing or other microstructure evaluation. It is needless to mention that the contact is ohmic when the resistance shows no polarity depending on the measurement direction.

For example, the PTC material 41 is pulverized particles of a BaTiO₃ semiconductor ceramic. Specifically, the PTC material 41 that is used may be an N-type semiconductor that is BaTiO₃ doped with a donor. The donor may be formed by substituting a very small portion of Ba sites with a trivalent rare earth element such as yttrium (Y) or by substituting a portion of Ti sites with a pentavalent element such as niobium (Nb). The particle size of BaTiO₃ is, for example, in the range of greater than or equal to 0.2 µm and less than or equal to 10 µm.

To enhance the PTC characteristics, the PTC material 41 may contain a trace amount of a transition element such as manganese (Mn) or cobalt (Co). In this case, the coefficient of resistance at the time of heat generation is markedly high, and thus the switching performance of the PTC material 41 can be manifested prominently. For example, the value of resistance at the time of manifestation of the PTC characteristics is increased by about 5 to 8 orders of magnitude. As a result, the current can be reliably interrupted to stop the operation of the battery.

The switching temperature is 120°C without substitution and may be raised by substituting Ba sites with lead (Pb) having a larger ionic radius than Ba ion. Alternatively, the switching temperature may be lowered by substituting Ba sites with strontium (Sr) having a smaller ionic radius than Ba ion. The switching temperature is a temperature at which the PTC material 41 increases its resistance. For example, the switching temperature may be controlled appropriately in the range of about 70°C to 250°C so as to suppress the generation of heat at a desired temperature. The switching temperature may also be lowered by substituting Ti sites with Sn. Further, withstand voltage and withstand current characteristics may be enhanced by, for example, reducing the size of crystal particles. Further, the reduction resistance may be enhanced by increasing the ratio of Ba in excess of Ti or by using a trivalent semiconductor element. The excess of Ba over Ti is, for example, in the range of + 0.05% to + 5.0%. In this manner, the reliability of battery operation and the reliability of PTC characteristics against the outside air may be further improved.

The first metal 42 may be any metal that can form an ohmic contact with the PTC material 41. That is, the first metal 42 also forms an ohmic contact with the current collector. For example, the first metal 42 is at least one selected from the group consisting of Sn, Cu, Al, Mg and Zn. Copper is a metal element contained in a general conductive resin and thus may be excluded from the group. That is, the first metal 42 may be at least one selected from the group consisting of Sn, Al, Mg and Zn. When the PTC material 41 is based on BaTiO₃, the first metal 42 easily forms an ohmic contact therewith when the metal has a work function smaller than the work function of Ag which is about 4.5 eV to 4.7 eV. The first metal 42 that is used may be a powder. The particle size and the shape of the first metal 42 are not particularly limited as long as the buffer layer 40 is not shortcircuited and the metal particles can form an ohmic contact with the PTC material 41 and the current collector. The first metal 42 may include a blend of metal particles having a lower work function than Ag and particles having high conductivity such as Ag, Ni, Pd or Pt. The type of the first metal 42 may be selected appropriately from the point of view of production process such as whether the metal is easily dispersed, while ensuring that PTC characteristics will be obtained. For example, the particle size of the first metal 42 is in the range of greater than or equal to 0.1 µm and less than or equal to 10 µm. The particle shape of the first metal 42 may be spherical or flat.

The buffer layer 40 includes the resin 43, and therefore is softer than other battery constituent members such as the current collectors and can easily form a connection with a low Young's modulus. Thus, stress generated at the interface between the buffer layer 40 and the current collector is absorbed, and the connection interface attains enhanced durability against mechanical and thermal shocks and against charging/discharging cycles. Further, the resin 43 present around the PTC material 41 can protect the PTC material 41 that is susceptible to the environment.

To ensure the environment resistance performance such as reduction resistance of the BaTiO₃-based PTC material 41, the resin 43 that is used in the buffer layer 40 may be a resin material having high sealing properties against the passage of gas and water. For example, the resin 43 does not include open voids. The resin 43 may be a thermoplastic resin or a thermosetting resin. Examples of the thermoplastic resins include polyethylene-based resins, polypropylene-based resins, acrylic-based resins, polystyrene-based resins, vinyl chloride-based resins, silicone-based resins, polyamide-based resins, polyimide-based resins, fluorinated hydrocarbon-based resins, polyether-based resins, butadiene rubbers, isoprene rubbers, styrene-butadiene rubbers (SBR), styrene-butadiene-styrene copolymers (SBS), styrene-ethylene-butadiene-styrene copolymers (SEBS), ethylenepropylene rubbers, butyl rubbers, chloroprene rubbers and acrylonitrile-butadiene rubbers. Examples of the thermosetting resins include (i) amino resins such as urea resins, melamine resins and guanamine resins, (ii) epoxy resins such as bisphenol A epoxy resins, bisphenol F epoxy resins, phenol novolak epoxy resins and alicyclic epoxy resins, (iii) oxetane resins, (iv) phenol resins such as resol resins and novolak resins, and (v) silicone-modified organic resins such as silicone epoxies and silicone polyesters.

For example, the Young's modulus of the resin 43 in the buffer layer 40 is expected to be lower than the Young's modulus of the current collector in view of the function of the buffer layer 40. For example, the Young's modulus of the resin 43 is lower than the Young's moduli of the PTC material 41 and the first metal 42. Such a configuration relaxes stress that is generated at the interface between the solid-state battery cell 2 and the buffer layer 40 due to temperature change or external stress, and also ensures absorption of stress generated around the PTC material 41 and the first metal 42 in the buffer layer 40. As a result, gaps that are continuous to the outside will not be formed, and the occurrence of connection resistance defects is suppressed. Further, such a buffer layer 40 is deformed in conjunction with the surface of the current collector and also in conjunction with the PTC material 41 and the first metal 42 during the laminating and compression process, thus offering an enhanced quality of joint. These actions and effects ensure that PTC characteristics can be obtained with high reliability.

To relax stress that is generated between the solid-state battery cell 2 and the buffer layer 40 by expansion or contraction of the first active material layer 12 and the second active material layer 22 due to temperature change or charging and discharging, and thereby to enhance the reliability of the PTC battery 1, the Young's modulus of the buffer layer 40 may be lower than the Young's moduli of the solid electrolyte layer 30, the first active material layer 12 and the second active material layer 22. The relative relationships of the above Young's moduli may be measured by pushing a probe into each of the constituent elements, and comparing pressure-displacement characteristics or the sizes of dents relative to one another.

The types, the shapes and the blending ratios of the materials for the buffer layer 40 may be controlled in light of the ease in production process as well as the stress relaxation performance, the thermal shock resistance and the thermal cycle resistance. Appropriate voids that do not extend throughout the buffer layer 40 may be formed in the inside of the buffer layer 40 to control the Young's modulus of the buffer layer 40. To prevent the PTC material 41 from exposure to a reducing atmosphere, it is desirable that the buffer layer 40 do not include open voids that extend from the upper face to the lower face of the buffer layer 40. The state of voids may be determined by a usual cross-sectional observation technique such as with an optical microscope or an electron microscope. Alternatively, a randomly selected cross section may be analyzed by a technique such as CT (computed tomography) scanning. The air permeability may be strictly evaluated by analyzing the structure by a technique generally used for, for example, ceramic packages, such as a nitrogen or helium leak tester. By adopting the structure described above, the environmental resistance of PTC characteristics in the buffer layer 40 may be enhanced.

In the buffer layer 40, a material that contains conductive material particles or semiconductor material particles in a solid electrolyte may be added to the resin 43. In this manner, the expansion/contraction characteristics of the buffer layer 40 approach those of the solid-state battery cell 2. As a result, stress that is generated between the buffer layer 40 and the current collector due to temperature change or during charging/discharging is relaxed, and the battery 1 attains highly reliable PTC characteristics.

The buffer layer 40 may not be formed over the entirety of the face of the current collector, and may be formed partially, for example, may be patterned on the face of the current collector in contact therewith. That is, the buffer layer 40 may be formed in any manner as long as it is connected in series with the current collector. The buffer layer 40 may be composed of a plurality of layers of different materials, for example, a plurality of layers containing the PTC material 41 and the first metal 42 in different ratios.

The thickness of the buffer layer 40 is not particularly limited, but a smaller thickness is more advantageous from the point of view of the volumetric energy density of the battery 1. That is, the thickness of the buffer layer 40 may be small as long as the reliability such as the withstand voltage for PTC characteristics may be ensured. For example, the thickness of the buffer layer 40 is greater than or equal to 1 µm and less than or equal to 100 µm, and preferably greater than or equal to 2 µm and less than or equal to 10 µm. With such a configuration, the decrease in volumetric energy density is small while ensuring that the buffer layer will relax stress caused by expansion or contraction of the current collector due to temperature change.

The specific gravity of the buffer layer 40 is not particularly limited, but a lower specific gravity is more preferable from the point of view of weight energy density. For example, the specific gravity of the buffer layer 40 may be lower than the specific gravity of the current collectors made of metal materials. Such a buffer layer has less influence on the weight energy density.

### [Effects and other facts]

When compared to the configurations of the batteries described in Patent Literature 1 and Patent Literature 2, the configuration of the battery 1 according to the present embodiment has the following differences.

First, Patent Literature 1 discloses an all-solid-state battery using a PTC resin as a current collector. However, the PTC layer in the battery according to Patent Literature 1 is formed using a carbon conductive agent such as acetylene black, and a thermally expandable resin, and thus differs from the buffer layer 40 according to the present embodiment in terms of materials. Thus, the PTC material described in Patent Literature 1 has a high electrical resistance to deteriorate the charging/discharging characteristics of the battery. Further, the battery according to Patent Literature 1 also has a problem in repeated use after expansion.

In contrast, the battery 1 according to the present embodiment is designed so that the first metal 42 contained in the buffer layer 40 forms an ohmic contact with the current collector and the PTC material 41. As a result, the buffer layer 40 can realize a low resistance. Further, in the battery 1, the resin 43 in the buffer layer 40 is not a thermally expandable resin and thus is not expanded at all due to heat generation.

Further, the PTC layer in Patent Literature 1 is disposed on the active material, that is, the active material layer and the PTC layer are in contact with each other. Thus, the PTC layer is affected by the redox reaction directly over the surface thereof. This causes a significant problem in the stability of battery operation.

Further, Patent Literature 2 discloses an all-solid-state battery in which a PTC layer is disposed between an active material layer and a current collector. The PTC layer is based on a thermally expandable resin material similarly to Patent Literature 1, and is arranged between the active material layer and the current collector. Thus, the battery described in Patent Literature 2 suffers an increase in resistance loss of the battery and has a problem in the stability of battery operation similarly to Patent Literature 1.

In contrast, the battery 1 according to the present embodiment is designed so that the buffer layer 40 including the PTC material 41 is provided on the face of the current collector opposite to the face on which the active material layer is disposed. Thus, the PTC material stays away from contact with the active material layer and therefore the PTC material can be prevented from being reduced. Patent Literature 1 and Patent Literature 2 do not disclose or suggest the battery of the present embodiment in which the buffer layer 40 including the PTC material 41 and the first metal 42 in the resin 43 is provided on the face of the current collector opposite to the active material layer.

As described hereinabove, the battery 1 according to the present embodiment attains reduced probabilities of ignition and smoke combustion of the battery due to heat generation or overcurrent. That is, the battery 1 can realize high reliability and high performance.

### [Modification Example 1]

Hereinbelow, Modification Example 1 of the embodiment will be described. The following description of Modification Example 1 will focus on the differences from the embodiment, and will omit or simplify the explanation of commonalities.

Fig. 2 is a set of views illustrating a schematic configuration of a battery according to Modification Example 1 of the embodiment. Specifically, Fig. 2(a) is a sectional view of a battery 100 according to Modification Example 1, and Fig. 2(b) is a plan view of the battery 100 as viewed from the positive side in the z-axis direction. Fig. 2(a) illustrates a cross section at the position indicated by the line II-II in Fig. 2(b). Fig. 2(c) is an enlarged schematic sectional view of a portion of the cross section illustrated in Fig. 2(a).

As illustrated in Fig. 2, the battery 100 according to Modification Example 1 of the embodiment differs from the battery 1 according to the embodiment in that the battery 100 has a buffer layer 140 in place of the buffer layer 40. The buffer layer 140 includes an alloy layer 144 in contact with the current collector. The alloy layer 144 principally contains a second metal 142. The alloy layer 144 is a layer formed by diffusion of the second metal 142 having a low melting point into the current collector, and strongly joins the current collector and the buffer layer 140 to each other. For example, the alloy layer 144 may be formed in such a manner that a PTC layer containing a low-melting second metal 142 in a thermosetting resin is cured to cause the second metal 142 to be diffused from the resin 43 into the current collector.

The second metal 142 that is used may be metal particles having a low melting point. For example, the second metal 142 is at least one selected from the group consisting of Sn (tin), Ag (silver), Cu (copper), bismuth (Bi), Al (aluminum) and Zn (zinc), or is an alloy of any of these metals. Silver and copper are metal elements contained in a general conductive resin and thus may be excluded from the group. That is, the second metal 142 may be at least one selected from the group consisting of Sn, Al, Mg and Zn.

The metal having a low melting point is a metal having a melting point of, for example, less than or equal to 300°C. Specifically, for example, use may be made of tin, tin-zinc alloy, tin-silver alloy, tin-copper alloy, tin-aluminum alloy, tin-lead alloy, indium, indium-silver alloy, indium-zinc alloy, indium-tin alloy, bismuth, bismuth-silver alloy, bismuth-nickel alloy, bismuth-tin alloy, bismuth-zinc alloy or bismuth-lead alloy. When, for example, the current collector is Cu and the second metal 142 is Sn, heat treatment results in tin-copper alloy that is diffused at the interface to form an alloy layer 144. The low-melting metal can bond and form a strong joint interface even at a temperature about half of the melting point.

For example, the proportion of the second metal 142 is 1 vol% to 10 vol% relative to the volume of the buffer layer 140. The ingredient components and the contents are selected in light of the thickness of the alloy layer 144 and the joint strength. Properties such as thickness of the alloy layer 144 may be controlled appropriately by manipulating the heat treatment temperature.

The first metal 42 is a metal capable of forming an ohmic contact with the PTC material 41, and is selected appropriately in accordance with the type of the PTC material 41. The second metal 142 is a metal capable of forming an alloy with the metal contained in the current collector, and is selected appropriately in accordance with the type of the current collector. Thus, the first metal 42 and the second metal 142 may be the same metal, or the first metal 42 and the second metal 142 may be dissimilar metals.

As described above, the battery 100 according to Modification Example 1 can attain a strong joint between the current collector and the buffer layer 140. As a result, the battery 100 can exhibit PTC characteristics with higher reliability against impacts, thermal cycles and charging/discharging cycles.

### [Modification Example 2]

Hereinbelow, Modification Example 2 of the embodiment will be described. The following description of Modification Example 2 will focus on the differences from the embodiment, and will omit or simplify the explanation of commonalities.

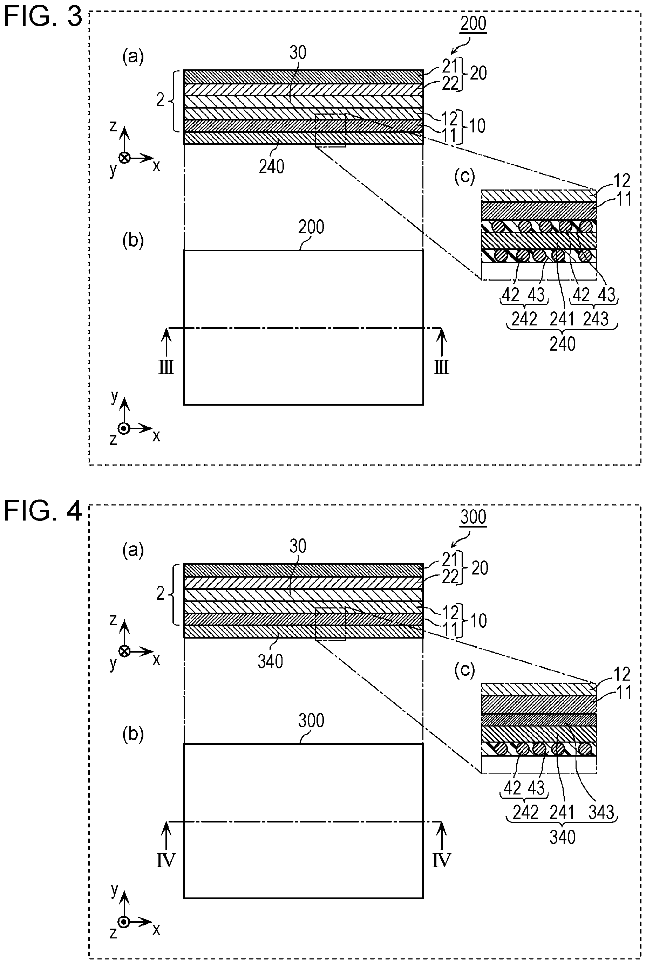

Fig. 3 is a set of views illustrating a schematic configuration of a battery according to Modification Example 2 of the embodiment. Specifically, Fig. 3(a) is a sectional view of a battery 200 according to Modification Example 2, and Fig. 3(b) is a plan view of the battery 200 as viewed from the positive side in the z-axis direction. Fig. 3(a) illustrates a cross section at the position indicated by the line III-III in Fig. 3(b). Fig. 3(c) is an enlarged schematic sectional view of a portion of the cross section illustrated in Fig. 3(a).

As illustrated in Fig. 3, the battery 200 according to Modification Example 2 of the embodiment differs from the battery 1 according to the embodiment in that the battery 200 has a buffer layer 240 in place of the buffer layer 40. The buffer layer 240 has a three-layer structure that includes a PTC layer 241 and two conductive resin layers 242 and 243 provided so as to sandwich the PTC layer 241 from both sides.

The PTC layer 241 includes the PTC material described hereinabove. For example, the PTC layer 241 is a layer of the PTC material 41 formed into a plate shape. Alternatively, the PTC layer 241 may be a layer formed by binding particles of the PTC material 41 with an agent such as a binder.

The conductive resin layers 242 and 243 each contain the first metal 42 and the resin 43. The conductive resin layer 242 covers a face of the PTC layer 241 opposite to the current collector.

The conductive resin layer 243 covers a face of the PTC layer 241 on the current collector side. The conductive resin layer 243 is disposed between the current collector and the PTC layer 241 and is in contact with each of these members. That is, the PTC layer 241 is electrically connected to the current collector through the conductive resin layer 243 containing the first metal 42. Thus, the conductive resin layers can establish an ohmic contact with the PTC layer 241, and the increase in resistance of the buffer layer 240 can be suppressed. By adopting this three-layer structure, an ohmic contact is established on both faces of the PTC layer 241 while protecting the PTC layer 241.

The thicknesses of the three layers may be each controlled appropriately in accordance with the production method and characteristics. The alloy layer 144 described in Modification Example 1 may be formed between the conductive resin layer 243 and the current collector. Further, the conductive resin layers 242 and 243 may contain electron conductive Ag particles or other conductive metals as long as the conductive resin layers contain the first metal 42 and are capable of forming an ohmic contact with the PTC layer 241. The configuration for effectively obtaining PTC characteristics is not limited to this Modification Example as long as the PTC layer 241 can produce PTC characteristics mainly through the first metal 42.

As described above, the battery 200 according to Modification Example 2 attains reduced probabilities of ignition and smoke combustion of the battery due to heat generation or overcurrent. That is, the battery 200 can realize high reliability and high performance.

### [Modification Example 3]

Hereinbelow, Modification Example 3 of the embodiment will be described. The following description of Modification Example 3 will focus on the differences from the embodiment or Modification Example 2, and will omit or simplify the explanation of commonalities.

Fig. 4 is a set of views illustrating a schematic configuration of a battery according to Modification Example 3 of the embodiment. Specifically, Fig. 4(a) is a sectional view of a battery 300 according to Modification Example 2, and Fig. 4(b) is a plan view of the battery 300 as viewed from the positive side in the z-axis direction. Fig. 4(a) illustrates a cross section at the position indicated by the line IV-IV in Fig. 4(b). Fig. 4(c) is an enlarged schematic sectional view of a portion of the cross section illustrated in Fig. 4(a).

As illustrated in Fig. 4, the battery 300 according to Modification Example 3 of the embodiment differs from the battery 200 according to Modification Example 2 in that the battery 300 has a buffer layer 340 in place of the buffer layer 240. The buffer layer 340 includes a metal layer 343 in place of the conductive resin layer 243.

The metal layer 343 includes the first metal described hereinabove. For example, the metal layer 343 is a layer of the first metal 42 formed into a plate shape. The metal layer 343 does not include the resin 43.

In this configuration too, the PTC layer 241 is electrically connected to the current collector through the metal layer 343. Thus, the metal layer can establish an ohmic contact with the PTC layer 241, and the increase in resistance of the buffer layer 340 can be suppressed.

The thickness of the metal layer 343 may be controlled appropriately in accordance with the production method and characteristics. The alloy layer 144 described in Modification Example 1 may be formed between the metal layer 343 and the current collector.

As described above, the battery 300 according to Modification Example 3 attains reduced probabilities of ignition and smoke combustion of the battery due to heat generation or overcurrent. That is, the battery 300 can realize high reliability and high performance.

### [Modification Example 4]

Hereinbelow, Modification Example 4 of the embodiment will be described. The following description of Modification Example 4 will focus on the differences from the embodiment, and will omit or simplify the explanation of commonalities.

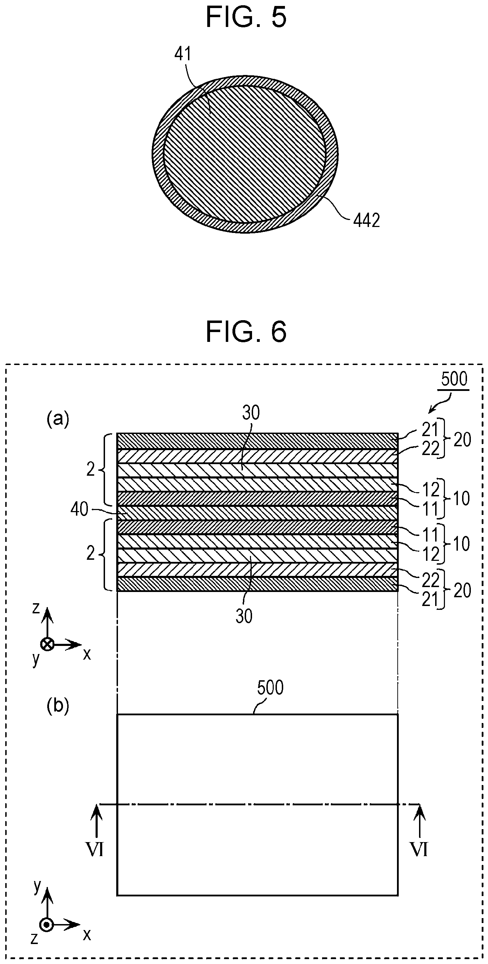

Fig. 5 is a view illustrating a schematic configuration of a particulate PTC material and a first metal in a buffer layer of a battery according to Modification Example 4. As illustrated in Fig. 5, the surface of a particulate PTC material 41 is coated with a first metal layer 442. While the structure according to the embodiment has been illustrated as being a dispersion of particles of the PTC material 41 and particles of the first metal 42 as a mixture, Modification Example 4 is such that the particulate PTC material 41 is coated with the first metal layer 442. The PTC characteristics of a BaTiO₃ semiconductor are expressed from crystal particle interfaces. Thus, the particulate PTC material 41 is preferably a polycrystalline particle having directly bonded grain boundaries.

According to the configuration described above, the connection between the particulate PTC material 41 and the first metal layer 442 is a plane connection, and the conductive area at the connection interface is significantly increased as compared to point contacts between particles. Thus, the PTC material 41 can produce its characteristics while the resistance loss is further reduced, and also the PTC material 41 can be protected in an enhanced manner. As a result, the PTC battery can realize higher reliability and higher performance.

The coating of the first metal layer 442 may be formed by a powder coating process such as a mechanical powder composite process or by electroless plating on the particulate PTC material 41. The coating film thickness of the first metal layer 442 is, for example, less than or equal to 1 µm.

As described above, the battery according to Modification Example 4 attains reduced probabilities of ignition and smoke combustion of the battery due to heat generation or overcurrent. That is, the battery can realize high reliability and high performance.

The PTC material 41 coated with the first metal layer 442 according to Modification Example 4 may be added as the PTC material 41 to the resin 43 in each of the embodiment and Modification Examples 1 to 3. In this case, the resin 43 may not contain the particulate first metal 42.

### [Modification Example 5]

Hereinbelow, Modification Example 5 of the embodiment will be described. The following description of Modification Example 5 will focus on the differences from the embodiment, and will omit or simplify the explanation of commonalities.

Fig. 6 is a set of views illustrating a schematic configuration of a battery according to Modification Example 5 of the embodiment. Specifically, Fig. 6(a) is a sectional view of a laminated battery 500 according to Modification Example 5, and Fig. 6(b) is a plan view of the laminated battery 500 as viewed from the positive side in the z-axis direction. Fig. 6(a) illustrates a cross section at the position indicated by the line VI-VI in Fig. 6(b).

As illustrated in Fig. 6, the laminated battery 500 according to Modification Example 5 differs from the battery 1 according to the embodiment in that two solid-state battery cells 2 are laminated and connected to each other through the buffer layer 40.

The two solid-state battery cells 2 are examples of the first solid-state battery cell and the second solid-state battery cell, respectively. The two solid-state battery cells 2 are laminated together through the buffer layer 40 and are electrically connected to each other in series.

In the example illustrated in Fig. 6, the two solid-state battery cells 2 are connected to each other through the respective positive electrode current collectors. As described in the embodiment, the first current collector 11 may be a negative electrode current collector. That is, the laminated battery 500 may include two solid-state battery cells 2 connected to each other through the respective negative electrode current collectors. The laminated body may include three or more solid-state battery cells 2.

With this configuration, a short circuit or abnormal heating that occurs in one of the solid-state battery cells 2 activates the buffer layer 40 to produce PTC characteristics and the current is thereby interrupted. The buffer layer 40 can establish a PTC ohmic connection between the solid-state battery cells 2 to constitute a low-loss series-connected laminated battery having PTC characteristics.

As described above, the laminated battery 500 according to Modification Example 5 attains reduced probabilities of ignition and smoke combustion of the battery due to heat generation or overcurrent. That is, the battery can realize high reliability and large capacity.

### [Battery production methods]

Next, an example method for producing the battery according to the present embodiment will be described. The following describes a method for producing the battery 1 according to the embodiment described hereinabove. First, pastes are prepared that are used for printing of a first active material layer (hereinafter, the positive electrode active material layer) 12 and a second active material layer (hereinafter, the negative electrode active material layer) 22. A solid electrolyte raw material is provided for use in each of a mixture for a positive electrode active material layer and a mixture for a negative electrode active material layer. For example, the solid electrolyte raw material is a Li₂S-P₂S₅-based sulfide glass powder having an average particle size of about 10 µm and principally including a triclinic crystal. For example, this glass powder may be a glass powder having a high ion conductivity of about 2 × 10⁻³ S/cm to 3 × 10⁻³ S/cm. The positive electrode active material used here may be, for example, a powder of a layered Li·Ni·Co·Al composite oxide (specifically, LiNi_{0.8}Co_{0.15}Al_{0.05}O₂) having an average particle size of about 5 µm. A mixture containing the positive electrode active material and the glass powder is dispersed into a medium such as an organic solvent to give a positive electrode active material layer paste. The negative electrode active material used here may be, for example, a natural graphite powder having an average particle size of about 10 µm. A mixture containing the negative electrode active material and the glass powder is similarly dispersed into a medium such as an organic solvent to give a negative electrode active material layer paste.

Next, for example, a copper foil having a thickness of about 30 µm is provided as a material for use as a first current collector 11 (hereinafter, the positive electrode current collector) and a second current collector 21 (hereinafter, the negative electrode current collector). The positive electrode active material layer paste and the negative electrode active material layer paste are each printed by a screen printing method in a predetermined shape and a thickness of about 50 µm to 100 µm onto one face of the respective sheets of the copper foil. The positive electrode active material layer paste and the negative electrode active material layer paste are dried at a temperature in the range of 80°C to 130°C and become about 30 µm to 60 µm in thickness. Thus, a positive electrode active material layer and a negative electrode active material layer are formed on the respective sheets of the current collector (the copper foil). That is, a first electrode 10 (hereinafter, the positive electrode) and a second electrode 20 (hereinafter, the negative electrode) are obtained.

Next, a solid electrolyte layer paste is prepared by dispersing a mixture that contains the glass powder described hereinabove into a medium such as an organic solvent. Using a metal mask, the solid electrolyte layer paste is printed with a thickness of, for example, about 100 µm onto the surface of the active material layer in each of the positive electrode and the negative electrode. The positive electrode and the negative electrode printed with the solid electrolyte layer paste are dried at a temperature in the range of 80°C to 130°C.

Next, the positive electrode and the negative electrode are combined together in such a manner that the solid electrolyte printed on the positive electrode active material layer of the positive electrode is opposed in contact to the solid electrolyte printed on the negative electrode active material layer of the negative electrode.

Next, elastic sheets having an elastic modulus of about 5 × 10⁶ Pa are inserted into the gaps between the upper face of the current collector and the pressure die plate. For example, the thickness of the elastic sheet is 70 µm. Subsequently, the unit is pressed for 90 seconds while heating the pressure die plates at 50°C at a pressure of 300 MPa.

A solid-state battery cell 2 is fabricated through the steps described above.

Next, a particulate PTC material 41 (specifically, a BaTiO₃-based semiconductor) having an average particle size of about 1 µm and a powder of a first metal 42 having an average particle size of 0.5 µm are added to a thermosetting conductive resin paste containing silver particles with an average particle size of 0.5 µm. The mixture is dispersed with a three-roll mill to give a resin paste (namely, a resin paste for a buffer layer 40) containing the PTC material 41 and the first metal 42. Next, the resin paste for a buffer layer 40 is printed through a metal mask onto the surface of the current collector in the solid-state battery cell 2. Next, the paste is subjected to thermosetting treatment in a dryer, for example, at 120°C for 1 hour, and is cooled to room temperature. A buffer layer 40 is thus formed from the buffer layer 40 resin paste.

A battery 1 is fabricated through the steps described above. The method for fabricating the battery 1, and the order of the steps are not limited to the above example.

While the production method described above illustrates that the positive electrode active material layer paste, the negative electrode active material layer paste, the solid electrolyte layer paste, and the buffer layer 40 resin paste are applied by printing, the application method is not limited to printing and may be, for example, a doctor blade method, a calender method, a spin coating method, a dip coating method, an inkjet method, an offset method, a die coating method or a spraying method.

While the production method described above illustrates that the buffer layer 40 resin paste is a thermosetting conductive resin paste containing silver metal particles, the conductive resin paste is not limited thereto and may be, for example, a thermosetting conductive resin paste that contains a resin, and highly conductive high-melting metal particles having a melting point of higher than or equal to 400°C, or low-melting metal particles having a melting point of lower than or equal to the curing temperature of the conductive resin paste, for example, lower than or equal to 300°C. Examples of the materials of the highly conductive high-melting metal particles include silver, copper, nickel, zinc, aluminum, palladium, gold, platinum, and alloys combining any of these metals. Examples of the materials of the low-melting metal particles having a melting point of lower than or equal to 300°C include tin, tin-zinc alloy, tin-silver alloy, tin-copper alloy, tin-aluminum alloy, tin-lead alloy, indium, indium-silver alloy, indium-zinc alloy, indium-tin alloy, bismuth, bismuth-silver alloy, bismuth-nickel alloy, bismuth-tin alloy, bismuth-zinc alloy and bismuth-lead alloy. By virtue of the conductive resin paste containing such low-melting metal particles, solid-phase reaction and liquid-phase reaction proceed at contact sites between the metal particles in the conductive resin paste and the metal in the current collector even when the thermosetting temperature is lower than the melting point of the highly conductive high-melting metal particles. The solid-phase and liquid-phase reactions at the interface between the conductive resin paste and the surface of the current collector form an alloy, which diffuses in the vicinity of the contact sites to form an alloy layer 144 that serves as a strong joint at the interface.

When, for example, silver or a silver alloy is used as the conductive metal particles and copper is used as the current collector, the alloy that will be formed is a highly conductive silver-copper alloy. Depending on the combination of the conductive metal particles and the current collector, for example, a silver-nickel alloy or a silver-palladium alloy may also be formed. As a result of the configuration described above, the current collector and the buffer layer are more strongly joined together, and the joint is effectively resistant to, for example, separation due to thermal cycles or impacts.

The highly conductive high-melting metal particles and the low-melting metal particles may have any shapes such as spherical shapes, scale-like shapes and acicular shapes. The particle sizes of the highly conductive high-melting metal particles and the low-melting metal particles are not particularly limited. In view of the fact that, for example, particles having a smaller size undergo the alloying reactions and diffusion at a lower temperature, the particle size and the shape are selected appropriately in consideration of the process design and the influence of the thermal history on the battery characteristics.

The resin used in the thermosetting conductive resin paste may be any resin that functions as a binder, and may be selected appropriately based on, for example, printability or applicability depending on the production process that will be adopted. For example, the resin used in the thermosetting conductive resin paste includes a thermosetting resin. Examples of the thermosetting resins include (i) amino resins such as urea resins, melamine resins and guanamine resins, (ii) epoxy resins such as bisphenol A epoxy resins, bisphenol F epoxy resins, phenol novolak epoxy resins and alicyclic epoxy resins, (iii) oxetane resins, (iv) phenol resins such as resol resins and novolak resins, and (v) silicone-modified organic resins such as silicone epoxies and silicone polyesters. These resin materials may be used singly, or two or more may be used in combination.

### (Other embodiments)

While the battery according to the present disclosure has been illustrated based on the above embodiment, the scope of the present disclosure is not limited to the above embodiment and includes various modifications from the embodiment that can be conceived by those skilled in the art, and other embodiments constructed by combining some constituent elements in the embodiments, without departing from the spirit of the present disclosure.

Various modifications such as changes, replacements, additions and omissions may be made to the embodiments described hereinabove within the scope of the claims and the equivalence thereof.

### Industrial Applicability

The battery according to the present disclosure may be used as, for example, a secondary battery such as an all-solid-state battery in various types of apparatuses such as electronic devices and automobiles.

### Reference Signs List

1, 100, 200, 300 batteries
2 solid-state battery cell
10 first electrode (positive electrode)
11 first current collector (positive electrode current collector)
12 first active material layer (positive electrode active material layer)
20 second electrode (negative electrode)
21 second current collector (negative electrode current collector)
22 second active material layer (negative electrode active material layer)
30 solid electrolyte layer
40, 140, 240, 340 buffer layers
41 PTC material
42 first metal
43 resin
142 second metal
144 alloy layer
241 PTC layer
242, 243 conductive resin layers
343 metal layer
442 first metal layer
500 laminated battery

## Claims

1. A battery comprising:
a first solid-state battery cell; and
a buffer layer, wherein
the first solid-state battery cell includes a positive electrode, a negative electrode and a solid electrolyte layer located between the positive electrode and the negative electrode,
the positive electrode or the negative electrode has a current collector,
the buffer layer is in contact with a face of the current collector opposite to the solid electrolyte layer,
the buffer layer includes a PTC material, a resin and a first metal, and
the first metal is at least one selected from the group consisting of Sn, Cu, Al, Mg and Zn.

2. The battery according to claim 1, wherein
the first metal is at least one selected from the group consisting of Sn, Al, Mg and Zn.

3. The battery according to claim 1 or 2, wherein
the buffer layer includes a PTC layer and a conductive resin layer,
the PTC layer includes the PTC material,
the conductive resin layer includes the resin and the first metal and does not include the PTC material, and
the conductive resin layer covers a face of the PTC layer opposite to the current collector.

4. The battery according to claim 3, wherein
the buffer layer includes one more of the conductive resin layer covering a face of the PTC layer on the current collector side.

5. The battery according to claim 3, wherein
the buffer layer includes a metal layer covering a face of the PTC layer on the current collector side, and
the metal layer includes the first metal.

6. The battery according to any one of claims 1 to 5, wherein
the buffer layer includes an alloy layer in contact with the current collector,
the alloy layer includes an alloy containing a second metal, and
the second metal is at least one selected from the group consisting of Sn, Ag, Cu, Bi, Al and Zn.

7. The battery according to claim 6, wherein
the second metal is at least one selected from the group consisting of Sn, Bi, Al and Zn.

8. The battery according to any one of claims 1 to 7, wherein
the PTC material is particles, and
the particles are coated with the first metal.

9. The battery according to any one of claims 1 to 8, wherein
the battery further includes a second solid-state battery cell, and
the first solid-state battery cell and the second solid-state battery cell are laminated together through the buffer layer.

10. The battery according to any one of claims 1 to 9, wherein
the solid electrolyte layer includes a solid electrolyte having lithium ion conductivity.
